Europäisches Patentamt

European Patent Office

Office européen des brevets

(11) Publication number: **0 313 350**
**A1**

# EUROPEAN PATENT APPLICATION

(21) Application number: 88309856.8

(22) Date of filing: 20.10.88

(51) Int. Cl.⁴: **B 66 F 7/24**
**B 60 T 3/00**

(30) Priority: 20.10.87 GB 8724513

(43) Date of publication of application:
26.04.89 Bulletin 89/17

(84) Designated Contracting States:
BE DE ES FR IT NL

(71) Applicant: PRESSPRIM LIMITED
Unit 3 Deacon Trading Estate
Newton-le-Willows Merseyside WA12 9XD (GB)

(72) Inventor: Kettley, Donald
14 Burnsall Avenue Lawton
Warrington Cheshire, WA3 2LT (GB)

(74) Representative: Lyons, Andrew John et al
ROYSTONS 531 Tower Building Water Street
Liverpool L3 1BA (GB)

(54) Levelling devices.

(57) A levelling device 10 for lateral levelling of a caravan or trailer has an upper arcuate surface 12 for wheel contact and a lower arcuate surface 14 for ground contact, the two surfaces diverging from a common start.

FIG.1

EP 0 313 350 A1

## Description

### Levelling devices

This invention concerns levelling devices, especially levelling devices for use with caravans and trailers.

Levelling systems are already provided for caravans and trailers for front to back levelling. However, lateral levelling of trailers and caravans is more difficult to achieve.

The object of this invention is to provide a levelling device for lateral levelling of a caravan or trailer.

According to this invention there is provided a levelling device for lateral levelling of a caravan or trailer, the device having a lower arcuate surface for ground contact and an upper arcuate surface for wheel contact, the said surfaces diverging from a common start.

The two surfaces are preferably provided by metal plates held apart by side walls of the device, also preferably of metal. In fact, the surface plates and side walls will probably be welded together.

The upper surface is preferably of constant radius and the lower surface preferably has a constantly increasing radius from the common start.

The ground contacting surface is preferably provided with means for gripping the surface, such as corrugations, ridges or other surface irregularities. In one particularly suitable embodiment of the invention the lower surface of the device has attached thereto, probably by welding, wire mesh, such as of the type used for fairly rigid fencing, in order to provide ground grip for the device of the invention.

In some circumstances it may also be advantageous but not essential to use a wedge shaped chock to support the levelling device of the invention.

The levelling device of the invention will be used when a caravan or trailer is to be sited on ground that slopes laterally thereof so that one side of the caravan or trailer needs to be raised relative to other side in order for the caravan or trailer to be level at least laterally. The device of the invention is placed in front of the wheel of the caravan or trailer on the side to be raised with the common start or point of the device closest to the wheel. The caravan or trailer is then rolled on to the device and its wheel is raised due to the divergence of its upper and lower surfaces.

Furthermore, the respective curvatures of the upper and lower surfaces of the device of the invention can be such that the downwards pressure of the wheel of the caravan or trailer will hold the device at whatever position the caravan or trailer is stopped for it to be level laterally.

The levelling device of the invention can also be used to provide security against theft of a caravan or trailer by being provided with means for securing the device to the wheel. For example, one or more preferably two U-shaped members may be securable over the wheel and to the device, say via an upstanding member located on the device. One or both of the U-shaped members may be lockable in position. Alternatively, locking may include movement of the U-shaped members and the levelling device towards each other.

Preferably the securing means comprises two U-shaped members mounted on an upstanding member, one of said U-shaped members being pivotable to overlie the other said U-shaped member for fitting to a wheel and away from the other said U-shaped member for retention of the securing means on the wheel.

The upstanding member preferably locates on one end of a bar that fits through the levelling device, the other end of the bar having an upturned L-shaped bracket that fits over the rim of a wheel on the levelling device. That provides for additonal security.

In additon, the upstanding member may carry a plate that covers wheel nuts again for added security.

Thus, the invention may provide not only means for levelling caravans or trailers but also means for securing same against theft.

The invention will now be further described, by way of example only, with reference to the accompanying drawings, in which:-

Figure 1 is a side view of a levelling device;

Figure 2 is a view from below of the levelling device of Figure 1;

Figure 3 is an end view of the levelling device of Figure 1;

Figure 4 shows a security version of a levelling device;

Figure 5 is a side view of another levelling device;

Figure 6 is a view from one end of the device of Figure 5;

Figure 7 is a view from the other end of the device of Figure 5;

Figures 8A, B and C and 9 show levelling devices of the invention in use;

Figure 10 is an exploded view of a combined levelling and security device using the levelling device of Figures 5 to 7;

Figure 11 is a sectional view showing the device of Figure 10 fitted to a wheel; and

Figures 12 and 13 are side views of the security device of Figure 10 in its two fitting stages.

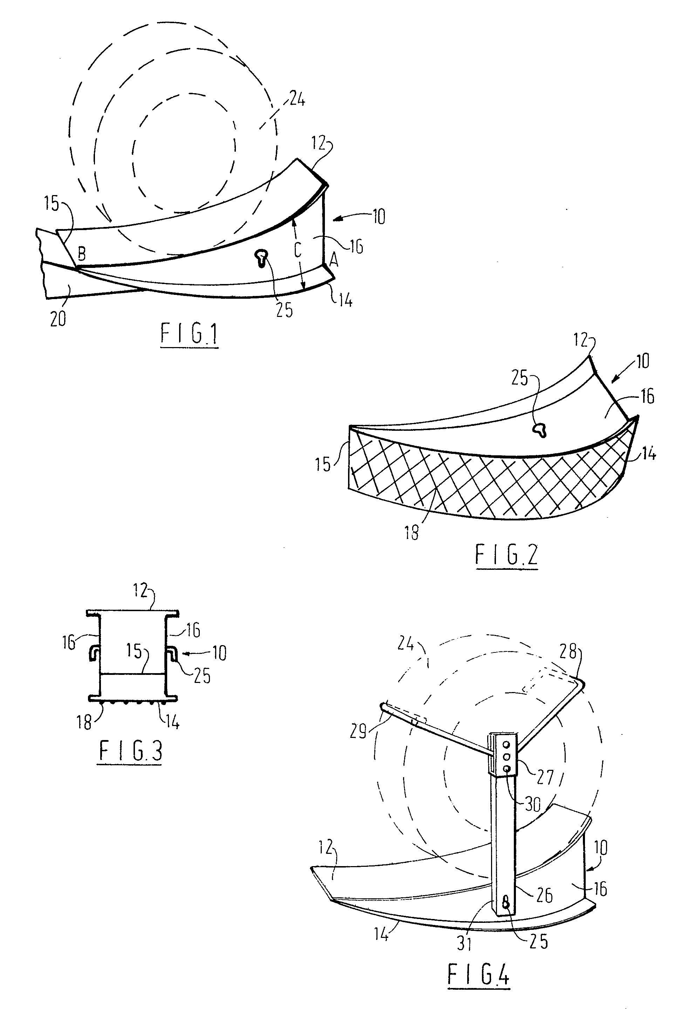

Referring to Figures 1 to 3 of the accompanying drawings, a levelling device 10 comprises an upper arcuate metal plate 12 and a lower arcuate metal plate 14, the two plates 12, 14 meeting at one end 15 of the device and diverging from there to form a wedge shape. The two plates 12 and 14 are supported by side walls 16 welded thereto.

The lower surface of plate 14 has welded thereto a grill or mesh 18 to provide ground grip. The device 10 may be used with a supporting wedge 20 that has an upper surface radius compatible with the lower surface radius of the device 10.

In use, the device 10 is placed next to a caravan or trailer wheel 24 to be raised to level the caravan or trailer laterally with the end 15 adjacent the wheel. The caravan or trailer is then rolled onto the device and, due to the divergence of the device surfaces, the caravan or trailer wheel is raised by amount corresponding to how far onto the device the wheel is rolled. The downwards pressure of the wheel on the device will, due to the curvature of its surfaces, hold wheel at the desired position. The wedge 20 can be used as shown in Figure 1 to support the device 10.

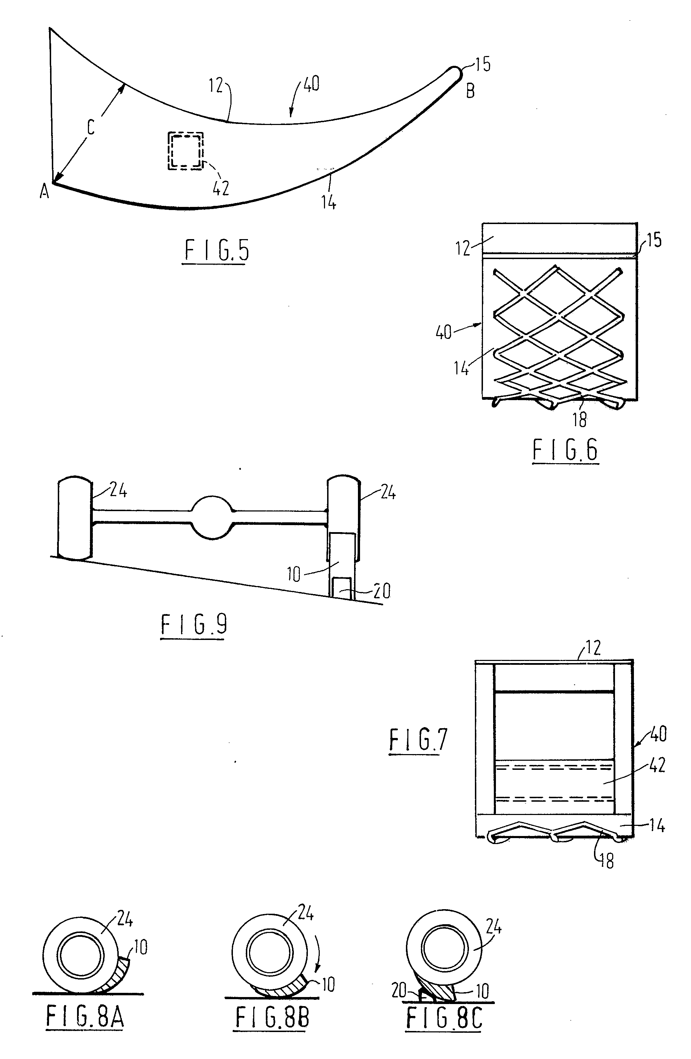

Turning to Figure 4 particularly, a pair of lugs 25 one on each of the side walls 16 of the device 10 provide locations for upstanding limbs 31. Each limb 31 carries at its other end a bracket 27 that slides over and is locked to the limb. U-shaped members 28 and 29 are fixed and the other movable, are retained in the brackets 27 and the movable member 29 fixed in position when the brackets are fitted onto the limbs 31. In use the U-shaped members 28 and 29 fit over a wheel 24 on the device 10. The U-shaped members 28 and 29 extend to the brackets 27 below the wheel rim so that the device cannot be removed by deflating the tyre.

A barrel lock through corresponding holes 30 of the bracket 27 and limb 31 on one side at least of the wheel is provided to lock the device securely to the wheel.

Referring now to Figures 5 to 7 of the accompanying drawings, a levelling device 40 is shown that is similar to that of Figures 1 to 3 so that like parts have been given the same reference numerals for ease of reference. The main difference between the respective devices is that the device 40 does not have lugs 25 but rather a square section tubular passage 42 therethrough from side to side. The use of the passage 42 will become apparent later.

The degree of curvature for the upper and lower surfaces of the levelling devices of the invention may be determined as follows. The radius of the upper surface is the radius of a vehicle tyre fully inflated. The radius of the lower surface is a constantly decreasing arc from point A to point B taken from a predetermined point in a line to the wide side of the wedge from the wheel centre to enable adjustable height of the vehicle wheel to dimension C calculated as a 1 in 12 gradient.

In Figures 8A, B and C and Figure 9, a levelling device either of type 10 or type 40 is shown in use. In Figure 8A the levelling device is shown in position prior to lifting. In Figure 8B, in which the arrow shows the direction of rotation of the wheel, approximately 50% lift is shown. In Figure 8C maximum lift is shown with a secondary wedge 20 in position. In Figure 9 a levelling device is shown supporting one of a pair of wheels 24 on a lateral slope of 1 in 12.

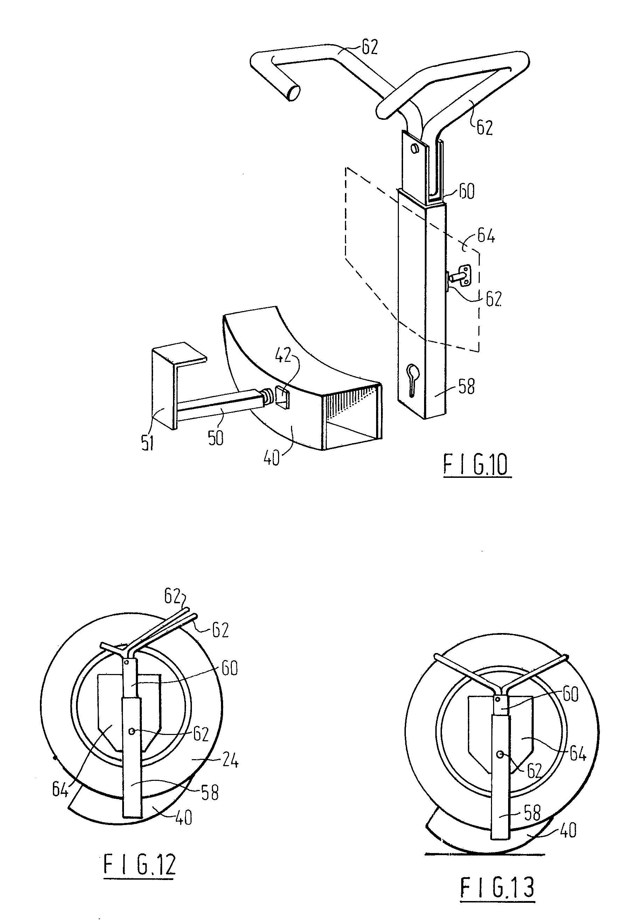

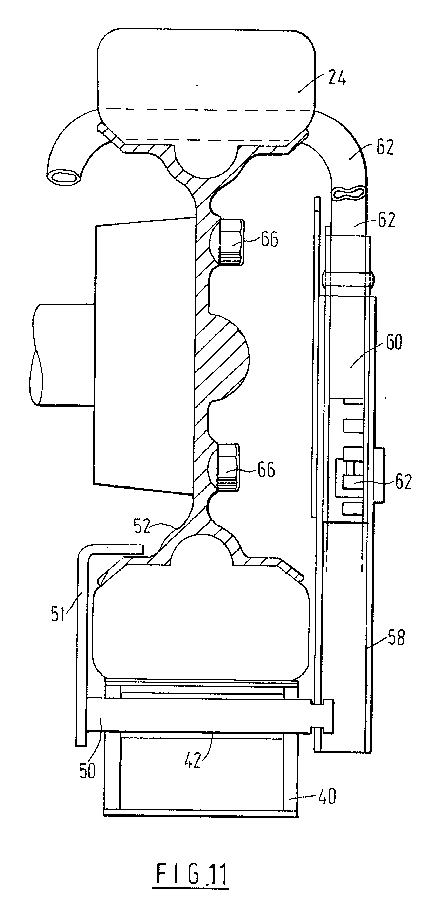

Turning to Figures 10 to 13, a levelling device 40 also has securing means for retaining the device 40 on a wheel primarily to prevent theft. The securing means comprises a bar 50 that fits through passage 42. On one end the bar has a L-shaped bracket 51 that is intended to fit over a wheel rim 52 (see Figure 11) of a wheel 24. At its other end the bar 50 has a perimetral groove 54 that is locatable in a keyhole slot 56 of a tubular member 58. The tubular member 58 contains slidably a member 60 that has mounted at its upper end a pair of U-shaped members 62. One U-shaped member is fixed and the other is pivotable to overlie the fixed member 62 (Figure 12) and to overlie the wheel (Figure 13).

The member 58 carries a plate 64 that covers wheel nuts 66 when the device is in position for additional security.

The securing means is fitted to a wheel when the device 40 is in position by pushing the bar 50 through the passage 42 so that the bracket 51 fits over the wheel rim. The two U-shaped members 62 are arranged as in Figure 12 and the member 58 fitted onto the other end of the bar 50. The pivotable U-shaped member 62 is then pivotted into the position shown in Figure 13 and the tubular member raised to draw the bar 50 and the U-shaped members 62 towards each other a locking mechanism 68 shown generally being used to secure the relative positions of the bar and the U-shaped members.

## Claims

1. A levelling device for lateral levelling of a caravan or trailer, the device having a lower arcuate surface for ground contact and an upper arcuate surface for wheel contact, the said surfaces diverging from a common start.

2. A device as claimed in claim 1, wherein said upper surface has a constant radius of curvature.

3. A device as claimed in claim 1 or 2, wherein said lower surface has a constantly increasing radius from said common start.

4. A device as claimed in claim 1, 2 or 3 wherein the ground contacting surface is provided with means for gripping the ground.

A device as claimed in claim 4, wherein said gripping means comprises wire mesh.

A device as claimed in any one of claims 1 to 5, further comprising means for securing the device to a wheel.

7. A device as claimed in claim 6, wherein said securing means comprises one or more U-shaped members securable over the wheel.

8. A device as claimed in claim 7, wherein said securing means comprises two U-shaped members one of which is fixed and the other is pivotable between two positions, in the first of which said other member overlies the fixed member for fitting to the wheel and in the second of which said other member is divergent from the fixed member for retention of the securing means on the wheel.

9. A device as claimed in claim 8, including locking means.

10. A device as claimed in claim 7, 8 or 9 wherein said U-shaped members are mounted on an upstanding member fastenable to the levelling device.

FIG.1

FIG.2

FIG.3

FIG.4

F I G.5

F I G.6

F I G.9

F I G.7

F I G.8A   F I G.8B   F I G.8C

FIG.10

FIG.12

FIG.13

FIG.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 684 233  (VUKICH) <br> * claim 1; figures 1,2 * | 1,2 | B 66 F    7/24 <br> B 60 T    3/00 |
| Y | | 4 | |
| Y | FR-A-2 340 845  (SAUTOUR et al.) <br> * figures 1-4 * | 4 | |
| A | US-A-3 973 651  (GARRETT et al.) <br> * figures 1-3 * | 5 | |
| A | US-A-3 695 071  (WEST) <br> * figures 1-6 * | 6-10 | |
| A | SOVIET INVENTIONS ILLUSTRATED Section Mechanical, week 84, 25th April 1984, abstract no. 067503, Q 18, Derwent Publications Ltd., London, GB; & SU - A - 10 17549 (CENTRAL ASIA MACH-T) 15-05-1983 | 6-8,10 | |

TECHNICAL FIELDS SEARCHED (Int. Cl.4)

B 66 F    7/00
B 60 T    3/00

The present search report has been drawn up for all claims

| Place of search | Date of completion of the search | Examiner |
|---|---|---|
| BERLIN | 05-01-1989 | LUDWIG H J |

EPO FORM 1503 03.82 (P0401)